# EUROPEAN PATENT APPLICATION

(11) **EP 4 382 422 A1**
(43) Date of publication of application: **12.06.2024**
(21) Application number: 23214117.6
(22) Date of filing: 04.12.2023
(51) Int. Cl.: B64D 11/00

(54) **INTEGRATED SNACK BAR FOR COMMERCIAL AIRCRAFT SEATS**

(30) Priority: 05.12.2022 IN 202241070159; 15.02.2023 US 202318110143
(71) Applicant: B/E Aerospace, Inc., Winston-Salem, NC 27105 (US)
(72) Inventor: SRINIVASA, Ashwin, Hyderabad (IN); ANUMAKONDA, Sanjeev, Hyderabad (IN)
(74) Representative: Dehns

(57) **Abstract**

A seat mounted housing (300) is disclosed herein. The seat mounted housing including a cavity (312) formed within the seat mounted housing, the cavity including a back panel and a sidewall. The seat mounted housing further including a first securing strap (314) having a first end and an opposing second end, the first end of the first securing strap coupled to a first attachment point on the back panel, the opposing second end of the first securing strap coupled to a second attachment point on the back panel, the first securing strap configured to hold and secure a first item within the cavity.

## Description

### CROSS-REFERENCE TO RELATED APPLICATIONS

This application claims priority to, and the benefit of, India Patent Application No. 202241070159 (DAS CODE: 3C6D), filed December 5, 2022, and titled "INTEGRATED SNACK BAR FOR COMMERCIAL AIRCRAFT SEATS," and U.S. application 18/110, 143 filed on 15 February 2023..

### FIELD

The present disclosure generally relates aircraft seats, and more particularly, to commercial airline seats.

### BACKGROUND

Modern commercial airlines provide meals, snacks, and/or drinks to passengers during a flight. The meals, snacks, and drinks are brought to the passenger by a member of the cabin crew during the flight. This generally includes retrieving and/or preparing the meals, snacks, and drinks in a galley of the aircraft and delivering it to each passenger individually. However, the delivery of meals, snacks, and drinks does not occur during the time periods around takeoff and landing and may be delayed due to adverse weather or flight conditions. This delay can be problematic for passengers with medical issues. Additionally, serving meals, snacks, and drinks takes time for the cabin crew that may be used for other flight related duties.

### SUMMARY

A seat mounted housing is disclosed herein. The seat mounted housing includes a cavity formed within the seat mounted housing, the cavity including a back panel and a sidewall. The seat mounted housing further includes a first securing strap having a first end and an opposing second end, the first end of the first securing strap coupled to a first attachment point on the back panel, the opposing second end of the first securing strap coupled to a second attachment point on the back panel, the first securing strap configured to hold and secure a first item within the cavity.

In various embodiments, the seat mounted housing further includes a tray configured to move from a closed position to an open position, the cavity being covered by the tray in the closed position, and the cavity being exposed by the tray in the open position and a latch configured to lock and unlock the tray when in the closed position. In various embodiments, the latch is a manual latch. In various embodiments, the latch is an electromechanical latch. In various embodiments, the seat mounted housing further includes a barrier disposed between the tray and the cavity, the barrier covering the cavity independent of the tray.

In various embodiments, the seat mounted housing further includes an inflight entertainment module disposed above the cavity. In various embodiments, the seat mounted housing further includes a second securing strap having a first end and an opposing second end, the first end of the second securing strap coupled to a third attachment point on the back panel, the opposing second end of the second securing strap coupled to a fourth attachment point on the back panel, the second securing strap configured to hold and secure a second item within the cavity.

In various embodiments, the seat mounted housing further includes a plurality of attachment points disposed in the cavity, the plurality of attachment points including the first attachment point and the second attachment point. In various embodiments, a subset of the plurality of attachment points is disposed in the sidewall of the cavity.

Also disclosed herein is a seat including a seat back disposed in the seat back. The snack bar includes a cavity formed within the seat back, the cavity including a back panel and a sidewall and a first securing strap having a first end and an opposing second end, the first end of the first securing strap coupled to a first attachment point on the back panel, the opposing second end of the first securing strap coupled to a second attachment point on the back panel, the first securing strap configured to hold and secure a first item within the cavity.

In various embodiments, the seat further includes an inflight entertainment module disposed in the seat back and above the snack bar. In various embodiments, the seat further includes a tray coupled to the seat back, the tray configured to move from a closed position covering the snack bar to an open position exposing the snack bar and a latch configured to lock and unlock the tray when in the closed position. In various embodiments, the latch is a manual latch. In various embodiments, the latch is an electromechanical latch. In various embodiments, the tray is coupled to the snack bar.

Also disclosed herein is a passenger seat including a seat back including a front side and an opposing back side and a seat mounted housing configured to mount to the back side of the seat back. The seat mounted housing includes a cavity extending from the front side of the seat back to a back side of the seat mounted housing, the cavity defined by sidewalls and a back wall, a plurality of attachment points disposed within the cavity, the plurality of attachment points coupled to the back wall and sidewalls, and a securing strap having a first end and a second end, the securing strap configured to attach to the cavity at the plurality of attachment points, the first end coupled to a first attachment point of the plurality of attachment points and the second end coupled to a second attachment point of the plurality of attachment points.

In various embodiments, the seat mounted housing further includes a tray configured to move from an open position to a closed position, the tray covering the cavity in the closed position and exposing the cavity in the open position. In various embodiments, the tray is coupled to the seat mounted housing. In various embodiments, the seat mounted housing further includes a barrier disposed between the cavity and the tray when the tray is in the closed position, the barrier configured to cover the cavity when the tray is in the open position. In various embodiments, the seat mounted housing further includes a latch configured to lock the tray in the closed position.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft and various sections within the aircraft, in accordance with various embodiments.
FIG. 2 illustrates a cabin of an aircraft, in accordance with various embodiments.
FIGS. 3A and 3B illustrate an integrated snack bar for an airline seat, in accordance with various embodiments.
FIGS. 4A and 4B illustrate an integrated snack bar for an airline seat, in accordance with various embodiments.
FIGS. 5A and 5B illustrate an integrated snack bar for an airline seat, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein is a food compartment mounted to a seat back and designed for storing and dispensing meals, snacks, and/or drinks. In various embodiments, the food compartment is integrated into a housing that is connected to a passenger seat. In various embodiments, the food compartment may be located below the inflight entertainment module in the housing. In various embodiments, the food compartment is covered by the tray when the tray is in an upright and locked, or closed, position. In various embodiments, the food compartment is accessible when the tray is in an open, or down, position. In various embodiments, the food compartment may include a restraint for securing the food items within the food compartment. In various embodiments, the tray lock may be a manual lock. In various embodiments, the tray lock may be an electronic lock. In various embodiments, the food compartment and tray may be removable from the seat back. The food compartment disclosed herein may be stocked by cabin crew and/or ground crew prior to boarding the commercial aircraft.

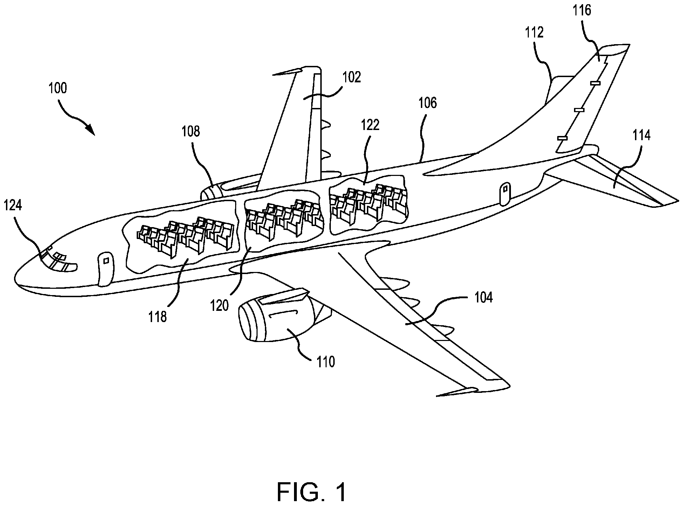

Referring now to FIG. 1, an aircraft 100 and various sections within the aircraft is illustrated, in accordance with various embodiments. The aircraft 100 is an example of a passenger or transport vehicle in which gesture-controlled systems may be implemented in accordance with various embodiments. In various embodiments, the aircraft 100 has a starboard wing 102 and a port wing 104 attached to a fuselage 106. In various embodiments, the aircraft 100 also includes a starboard engine 108 connected to the starboard wing 102 and a port engine 110 connected to the port wing 104. In various embodiments, the aircraft 100 also includes a starboard horizontal stabilizer 112, a port horizontal stabilizer 114, and a vertical stabilizer 116. In various embodiments, the aircraft 100 also includes various cabin sections, including, for example, a first cabin section 118, a second cabin section 120, a third cabin section 122, and a pilot cabin 124.

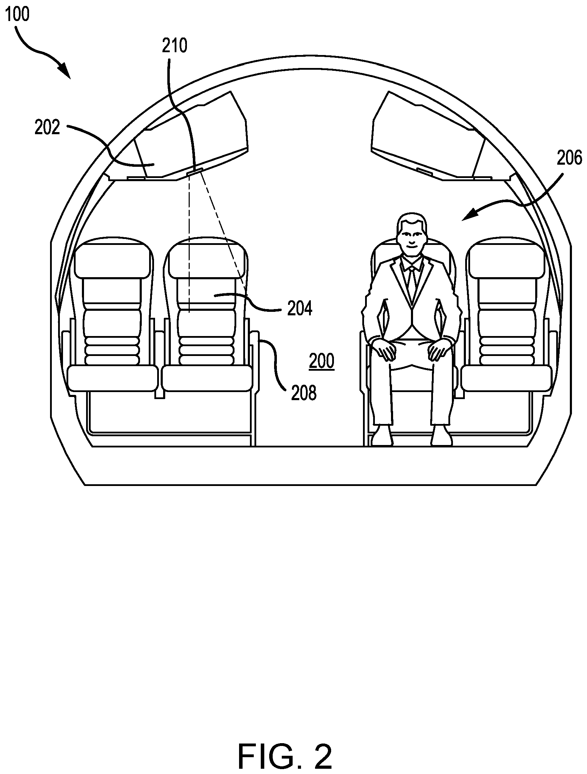

Referring now to FIG. 2, a cabin of an aircraft 100 is illustrated, in accordance with various embodiments. Cabin 200 may be a cabin such as the first cabin section 118, the second cabin section 120, or the third cabin section 122 of FIG. 1. In various embodiments, the cabin 200 may include overhead storage bins 202, passenger seats 204 for supporting passengers 206, armrest 208, lavatory surfaces, PEDs, and other structures/surfaces. In various embodiment, the cabin 200 may include passenger service units (PSUs) 210 that control various functions for passengers in the cabin 200, such as reading lighting, air conditioning, and a flight attendant call signal.

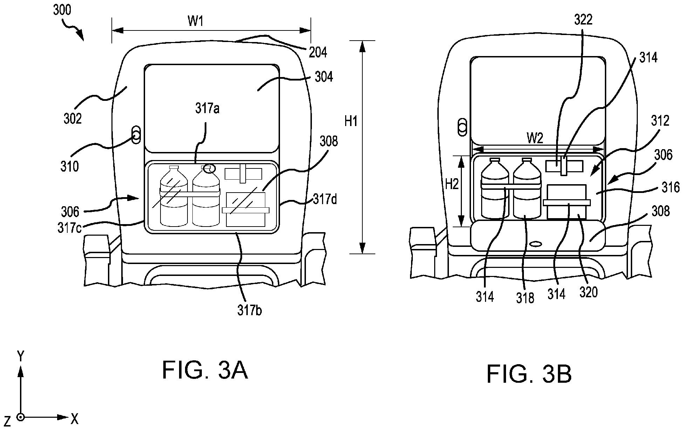

Referring now to FIGS. 3A and 3B, a seat mounted housing 300 for installation on a passenger seat 204, in accordance with various embodiments. Seat mounted housing 300 may be formed from many materials including aluminum, polymerized vinyl chloride (PVC), acrylic-polyvinyl chloride, or other lightweight moldable materials. In various embodiments, seat mounted housing 300 may be formed from thermoplastic acrylic-polyvinyl chloride such as that sold under the mark Kydex^{®} which is manufactured by Sekisusi SPI. Seat mounted housing 300 has a width w1 (e.g., along the x-axis), a height h1 (e.g., along the y-axis), and a depth d1 (e.g., along the z-axis). In various embodiments, seat mounted housing 300 is sized to attach to passenger seat 204 such that w1 is about equal to a width of passenger seat 204 and h1 is about equal to a height of a back rest of passenger seat 204. Additionally, seat mounted housing 300 is sized so that the depth of the back rest of passenger seat 204 and depth d1 of seat mounted housing 300 does not encroach a predetermined head strike zone.

Seat mounted housing 300 includes a housing body 302, an inflight entertainment module 304, a food compartment 306, and a meal tray 308. Food compartment 306 may be alternatively referred to as a snack bar or food bar. For simplicity, food compartment will be used. Meal tray 308 may alternatively be referred to as tray 308. In various embodiments, seat mounted housing 300 may further include a latch 310 for opening meal tray 308. In various embodiments, latch 310 may be mounted to meal tray 308. In various embodiments, latch 310 may be a mechanical latch that releases meal tray 308 by sliding, rotating, or otherwise translating latch 310. In various embodiments, latch 310 may be an electromechanical latch including a solenoid, motor, or other device configured to secure and release meal tray 308. In various embodiments, meal tray 308 may be coupled to the food compartment by a hinge. In various embodiments, meal tray 308 may be coupled to the seat mounted housing 300 by a hinge.

FIG. 3A illustrates seat mounted housing 300 with food compartment 306 in a closed position. In the depicted embodiment, meal tray 308 secures food compartment 306 in the closed position. In various embodiments, a separate barrier may be located behind meal tray 308 to secure food compartment 306 after meal tray 308 is lowered or opened.

FIG. 3B illustrated seat mounted housing 300 with food compartment 306 in an open position. In the depicted embodiment, food within food compartment 306 is accessible after meal tray 308 is lowered or opened. In various embodiments, a secondary barrier, or panel, may be opened after lowering meal tray 308 in order to open food compartment 306. Food compartment 306 further includes a cavity 312 that extends into seat mounted housing 300, providing space to store meals, snacks, and/or drinks.

Cavity 312 has a width w2 (e.g., along the x-axis), a height h2 (e.g., along the y-axis), and a depth d2 (e.g., along the z-axis). In various embodiments, width w2 of cavity 312 may be about 60% to about 90% of width w1 of seat mounted housing 300, and more specifically, about 70% to about 90% of width w1. In various embodiments, height h2 of cavity 312 may be about 30% to about 60% of height h1 of seat mounted housing, and more specifically, about 40% to about 50% of height h1. In various embodiments, depth d1 of cavity 312 may be about 70% to about 95% of depth d1 of seat mounted housing 300, and more specifically, about 80% to about 90% of depth d1.

Cavity 312 is defined by a back wall 316, a first sidewall 317a, a second sidewall 317b, a third sidewall 317c, and a fourth sidewall 317c. First sidewall 317a and second sidewall 317b extend the width w2 of cavity 312 and are substantially parallel with each other. Third sidewall 317c and fourth sidewall 317d extend the height h2 of cavity 312 and are substantially parallel with each other. First and second sidewalls 317a, 317b are substantially orthogonal to third and fourth sidewalls 317c, 317d. Sidewalls 317a-317d are substantially orthogonal to back wall 316. In various embodiments, the intersection of back wall 316 and sidewalls 317a-317d form a squared corner that extends the around the perimeter of back wall 316. In various embodiments, the intersection of back wall 316 and sidewalls 317a-317d form a rounded corner that extends around the perimeter of back wall 316.

Cavity 312 is configured to hold and secure snacks, meals, and/or drinks of various types and in various configurations. Cavity 312 includes securing straps 314 to hold and secure snacks, meals and drinks. In various embodiments, securing straps 314 may be round or flat, among other shapes. In various embodiments, securing straps may include elastic materials, buckles, snaps, magnets, clips, or other fastening mechanisms. In various embodiments, back wall 316 of cavity 312 may include adjustable attachment points. In various embodiments, back wall 316 may include a plurality of attachment points where each attachment is configured to receive one end of at least one securing strap 314. Each securing strap 314 has a first end and a second end that each connect to the attachment points in cavity 312 so that the securing strap 314 between the first end and second end secure the food item in cavity 312.

In various embodiments, securing straps 314 may attach to cavity 312 by snaps, hooks, buckles, rivets, or hook and loop (e.g., Velcro^{®}), among others. In various embodiments, one or more shelves may be provided in cavity 312 to support the various items stored therein. In various embodiments, the plurality of attachment points in cavity 312 may consist of an interwoven webbing designed for load bearing, such as for example, the Modular Lightweight Load-carrying Equipment (MOLLE) system. In various embodiments, securing straps 314 may consist of two pieces, each piece consisting of a first end and a second end. The first end of each piece connects to cavity 312 and the second end of each piece configured to engage each other secure the item in cavity 312. In various embodiments, the two pieces may engage each other using snaps, hooks, buckles, or hook and loop (e.g., Velcro^{®}), among others.

The embodiment depicted in FIGS. 3A and 3B includes two drinks 318, a large snack 320, and a small snack 322. As illustrated, a first securing strap 314 is placed to secure both drinks 318, a second securing strap 314 is placed to secure large snack 320, and a third securing strap 314 is placed to secure small snack 322. In various embodiments, a further securing strap 314 may be placed to provide additional restraint for both drinks 318. In various embodiments, a single securing strap 314 may be used for each drink 318. It can therefore be appreciated by one having skill in the art that there are many different configurations available for snack, drink, and securing strap placement.

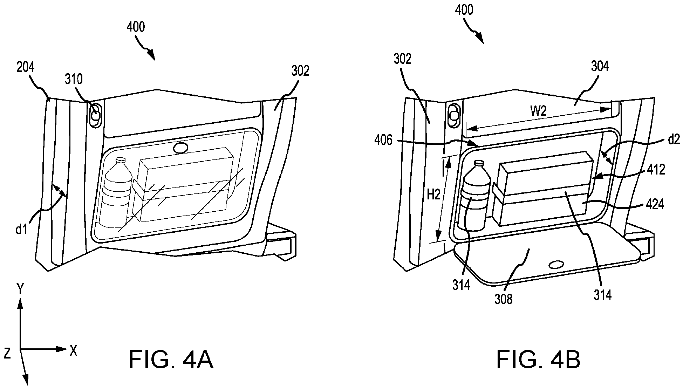

Referring now to FIGS. 4A and 4B, a perspective view of a seat mounted housing 400 is illustrated with a food compartment 406 in a closed position and an open position, in accordance with various embodiments. Seat mounted housing 400 includes similar components to those described above with respect to seat mounted housing 300 including, inflight entertainment module 304, meal tray 308, and latch 310. Seat mounted housing 400 further includes a food compartment 406 and a cavity 412. Food compartment 406 and cavity 412 are similar to food compartment 306 and cavity 312 described above. However, food compartment 406, including cavity 412, is setup to accommodate a single drink 318 and a boxed meal 424. Drink 318 is secured within cavity 412 using a first securing strap 314 and boxed meal 424 is secured within cavity 412 using a second securing strap 314. In various embodiments, additional securing straps 314 may be used to secure drink 318 and/or boxed meal 424.

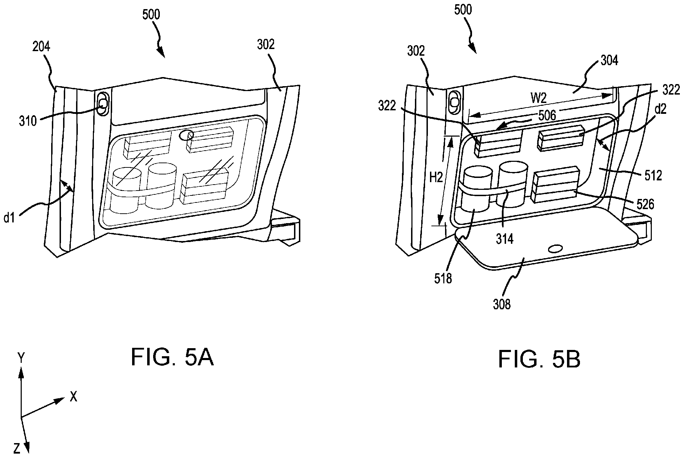

Referring now to FIGS. 5A and 5B, a perspective view of a seat mounted housing 500 is illustrated with a food compartment 506 in a closed position and an open position, in accordance with various embodiments. Seat mounted housing 500 includes similar components to those described above with respect to seat mounted housing 300 including, inflight entertainment module 304, meal tray 308, and latch 310. Seat mounted housing 500 further includes a food compartment 506 and a cavity 512. Food compartment 506 and cavity 512 are similar to food compartment 306 and cavity 312 described above. However, food compartment 506, including cavity 512, is setup to accommodate two drink cans 518, a snack bag 526, and two small snacks 322. Drink cans 518 are secured within cavity 512 using a first securing strap 314, snack bag 526 is secured within cavity 512 using a second securing strap 314, first small snack 322 is secured in cavity 512 using a third securing strap 314, and second small snack 322 is secured in cavity using a fourth securing strap. In various embodiments, additional securing straps 314 may be used to secure drink 318 and/or boxed meal 424.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Finally, it should be understood that any of the above-described concepts can be used alone or in combination with any or all of the other above-described concepts. Although various embodiments have been disclosed and described, one of ordinary skill in this art would recognize that certain modifications would come within the scope of the invention as defined by the claims

## Claims

1. A seat mounted housing, comprising:
a cavity (312) formed within the seat mounted housing (300), the cavity including a back panel and a sidewall; and
a first securing strap (314) having a first end and an opposing second end, the first end of the first securing strap coupled to a first attachment point on the back panel, the opposing second end of the first securing strap coupled to a second attachment point on the back panel, the first securing strap configured to hold and secure a first item within the cavity.

2. The seat mounted housing of claim 1, further comprising:
a tray (308) configured to move from a closed position to an open position, the cavity being covered by the tray in the closed position, and the cavity being exposed by the tray in the open position; and
a latch (310) configured to lock and unlock the tray when in the closed position.

3. The seat mounted housing of claim 2, wherein the latch is a manual latch, or wherein the latch is an electromechanical latch.

4. The seat mounted housing of claim 2 or 3, further comprising:
a barrier disposed between the tray and the cavity, the barrier covering the cavity independent of the tray.

5. The seat mounted housing of any preceding claim, further comprising:
an inflight entertainment module (304) disposed above the cavity.

6. The seat mounted housing of any preceding claim, further comprising:
a second securing strap (314) having a first end and an opposing second end, the first end of the second securing strap coupled to a third attachment point on the back panel, the opposing second end of the second securing strap coupled to a fourth attachment point on the back panel, the second securing strap configured to hold and secure a second item within the cavity.

7. The seat mounted housing of any preceding claim, further comprising:
a plurality of attachment points disposed in the cavity, the plurality of attachment points including the first attachment point and the second attachment point, and optionally wherein a subset of the plurality of attachment points is disposed in the sidewall of the cavity.

8. A seat, comprising:
a seat back;
a snack bar disposed in the seat back, the snack bar including:
a cavity (312) formed within the seat back, the cavity including a back panel and a sidewall; and
a first securing strap (314) having a first end and an opposing second end, the first end of the first securing strap coupled to a first attachment point on the back panel, the opposing second end of the first securing strap coupled to a second attachment point on the back panel, the first securing strap configured to hold and secure a first item within the cavity.

9. The seat of claim 8, further comprising:
an inflight entertainment module (304) disposed in the seat back and above the snack bar.

10. The seat of claim 8 or 9, further comprising:
a tray (308) coupled to the seat back, the tray configured to move from a closed position covering the snack bar to an open position exposing the snack bar; and
a latch (310) configured to lock and unlock the tray when in the closed position, and optionally wherein the tray is coupled to the snack bar

11. The seat of claim 10, wherein the latch is a manual latch, or wherein the latch is an electromechanical latch.

12. A passenger seat, comprising:
a seat back including a front side and an opposing back side;
a seat mounted housing (300) configured to mount to the back side of the seat back, the seat mounted housing including:
a cavity (312) extending from the front side of the seat back to a back side of the seat mounted housing, the cavity defined by sidewalls and a back wall;
a plurality of attachment points disposed within the cavity, the plurality of attachment points coupled to the back wall and sidewalls; and
a securing strap (314) having a first end and a second end, the securing strap configured to attach to the cavity at the plurality of attachment points, the first end coupled to a first attachment point of the plurality of attachment points and the second end coupled to a second attachment point of the plurality of attachment points.

13. The passenger seat of claim 12, wherein the seat mounted housing further comprises:
a tray (308) configured to move from an open position to a closed position, the tray covering the cavity in the closed position and exposing the cavity in the open position, and optionally wherein the tray is coupled to the seat mounted housing.

14. The passenger seat of claim 13, wherein the seat mounted housing further comprises:
a barrier disposed between the cavity and the tray when the tray is in the closed position, the barrier configured to cover the cavity when the tray is in the open position.

15. The passenger seat of claim 13 or 14, wherein the seat mounted housing further comprises:
a latch (310) configured to lock the tray in the closed position.
